# EUROPEAN PATENT SPECIFICATION

(11) **EP 2 940 254 B1**
(45) Date of publication and mention of the grant of the patent: **22.11.2017**
(21) Application number: 13867524.4
(22) Date of filing: 27.12.2013
(51) Int. Cl.: F01D 17/24, F01K 13/02, F01K 23/10, F01K 25/10, F01K 27/02, F02C 6/18

(54) **POWER GENERATION SYSTEM AND POWER GENERATION METHOD**
STROMERZEUGUNGSSYSTEM UND STROMERZEUGUNGSVERFAHREN
SYSTÈME ET PROCÉDÉ DE PRODUCTION D'ÉNERGIE

(30) Priority: 28.12.2012 JP 2012288961
(43) Date of publication of application: 04.11.2015
(73) Proprietor: Mitsubishi Heavy Industries, Ltd., Tokyo 108-8215 (JP)
(72) Inventor: HIRAO Toyotaka, Tokyo 108-8215 (JP); TATEISHI Taichi, Tokyo 108-8215 (JP); WATANABE Takashi, Tokyo 108-8215 (JP)
(74) Representative: Studio Torta S.p.A.
(86) International application number: PCT/JP2013/085133
(87) International publication number: WO 2014/104307

(56) References cited:
- EP-A1- 2 249 017
- JP-A- S6 088 806
- JP-A- 2005 337 065
- JP-A- 2008 175 108
- JP-B2- H0 331 884
- US-A1- 2005 247 059
- US-A1- 2011 192 163

## Description

### Technical Field

The present invention relates to a power generation system and a power generation method that perform power generation, using exhaust heat from vessels, factories, gas turbines, or the like, geothermal heat, solar heat, temperature difference between cooler deep and warmer shallow ocean waters, and the like as heat sources.

Priority is claimed on Japanese Patent Application No. 2012-288961, filed December 28, 2012.

### Background Art

In recent years, Rankine cycle type power generation systems have been considered as power generation systems that perform power generation, using exhaust heat from vessels, factories, gas turbines, or the like, geothermal heat, solar heat, temperature difference between cooler deep and warmer shallow ocean waters, and the like as heat sources, from the standpoint of effective energy use, environmental preservation, or the like (for example, refer to Patent Documents 1 to 3). In this case, when the heat sources as described above are used, for example, media having a boiling point lower than that of water, more specifically, organic fluids, such as chlorofluocarbon media, are used as media.

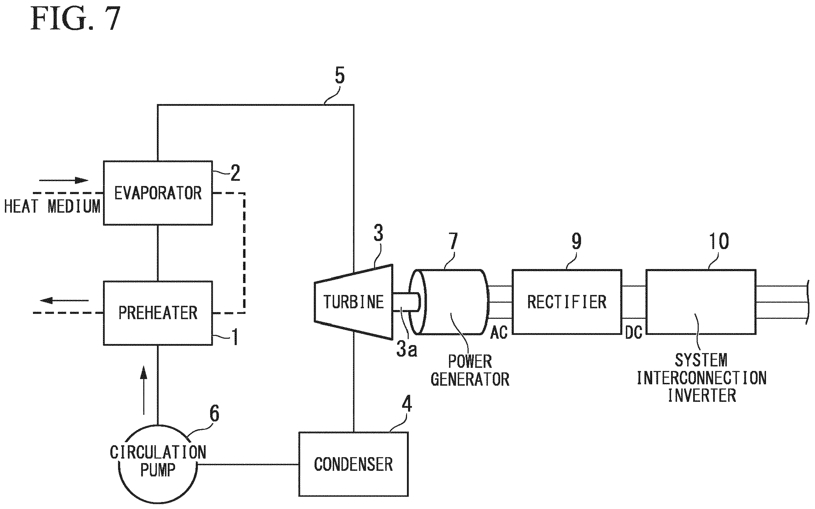

In such power generation systems, as shown in FIG. 7, a medium with a low boiling point, such as an organic fluid, is circulated within a cycle circuit 5 having a preheater 1, an evaporator 2, a turbine 3, and a condenser 4, using a circulation pump 6. A heat medium that has recovered heat from the heat sources as described above is sent into the evaporator 2, is made to perform heat exchange with the medium, and evaporates and gasifies the medium. Additionally, the heat medium that has passed through the evaporator 2 preheats the medium in the preheater 1 provided in the preceding stage of the evaporator 2.

The gasified medium expands in the turbine 3, thereby rotationally driving a main shaft 3a and driving a generator 7. The medium that has expanded in the turbine 3 is condensed in the condenser 4 and circulated to the circulation pump 6.

An alternating current (AC) output as the generator 7 is driven is converted into a direct current (DC) in a rectifier 9, and the converted direct current is re-converted into an alternating current in a system-interconnection inverter 10 and is output to the outside as generated electric power.

### Prior Art Document

### Patent Document

[Patent Document 1] Japanese Unexamined Patent Application, First Publication No. 2006-299996
[Patent Document 2] Japanese Unexamined Patent Application, First Publication No. 2006-313048
[Patent Document 3] Japanese Unexamined Patent Application, First Publication No. 2006-313049
[Patent Document 4] US 2005/247059

### Summary of Invention

### Technical Problem

When the exhaust heat as described above is used as the heat source or when natural energy, such as geothermal heat, solar heat, and temperature difference between cooler deep and warmer shallow ocean waters, is used as the heat source, the fluctuation amount of heat energy output from the heat source is large. If the heat energy from the heat source fluctuates, the inflow rate of gas, which is obtained when the medium evaporates in the evaporator 2, to the turbine 3 fluctuates. Then, the number of rotations of the turbine 3 fluctuates along with the fluctuations of the heat energy from the heat source. In a configuration in which the turbine 3 is used as a driving source of the generator 7, it is preferable to actuate the turbine 3 in a rotation region with high work efficiency. However, the turbine may be outside of the rotation region of high work efficiency due to fluctuations in the number of rotations of the turbine 3 accompanying the fluctuations of the heat energy from the heat source.

The invention provides a power generation system and a power generation method that can perform operation in a region where the efficiency of an expander is high, while coping with energy fluctuations from a heat source.

### Technical Solution

According to the invention, a power generation system includes the features of claim 1.

The amount of heat energy of exhaust heat from vessels, factories, gas turbines, or the like fluctuates in accordance with the operation situation or the like of the vessels, the factories, or the gas turbines. Additionally, natural energy, such as geothermal heat, solar heat, and temperature difference between cooler deep and warmer shallow ocean waters, also may fluctuate along with natural phenomena. In this way, in the power generation system using the external source, the heat quantity of which may fluctuate, even when the amount of heat energy of the external source has fluctuated, the expander can be operated in a region with high efficiency by controlling the flow rate of the medium flowing into the expander such that the number of rotations of the expander or the generator is within the region in which the number of rotations is preset.

The flow rate control device may control the opening degree of a flow rate regulating valve provided in the medium circuit or the number of rotations of the circulation pump so as to control the flow rate of the medium.

The number of rotations of the expander or the generator can be controlled by controlling the flow rate of the medium in the medium circuit. Accordingly, the flow rate of the medium flowing into the expander may be controlled such that the number of rotations of the expander or the generator is within the region in which the number of rotations is preset.

According to the invention, a plurality of sets of power generation units each including at least the expander and the generator are provided in parallel, and the flow rate control device increases or decreases the number of the power generation units to be operated so as to control the flow rate of the medium flowing into the expander such that the number of rotations of the expander or the generator in each of the power generation operating units is within the region in which the number of rotations is preset.

When the plurality of sets of power generation units are provided, the flow rate of the medium sent into the expander of each power generation unit is increased or decreased by increasing or decreasing the number of power generation units to be operated. Accordingly, the flow rate of the medium flowing into the expander may be controlled such that the number of rotations of the expander or the generator is within the region in which the number of rotations is preset.

Additionally, according to a further aspect of the invention, the power generation system may further include a measurement device configured to measure at least one of a temperature of the external source, a temperature or flow rate of the heat medium supplied from the external source to the evaporator, and a temperature of the medium at an outlet of the evaporator, and the flow rate control device may control the flow rate of the medium flowing into the expander on the basis of a change in a measurement result in the measurement device.

In this way, fluctuations of the heat energy supplied from the external source can be predicted, and the flow rate of the medium can be controlled on the basis of the fluctuations.

Additionally, according to another aspect of the invention, there is provided a power generation method, the method including the steps of claim 4.

In this way, in the power generation system using the external source, the heat quantity of which may fluctuate, even when the heat quantity of the external source has fluctuated, the expander can be operated in a region with high efficiency by controlling the flow rate of the medium flowing into the expander such that the number of rotations of the expander or the generator is within the region in which the number of rotations is preset.

### Advantageous Effects of Invention

According to the above-mentioned power generation system and power generation method, it is possible to operate the power generation system in a region with high efficiency, while coping with the energy fluctuations on the heat source.

### Brief Description of the Drawings

FIG. 1 is a view showing the configuration of a power generation system according to a first example.
FIG. 2 is a view showing the flow of a power generation method according to the first example.
FIG. 3 is a view showing an example of the relationship between the number of rotations and efficiency in a turbine and an example of a region in which the number of rotations is set.
FIG. 4 is a view showing the configuration of a power generation system according to the invention.
FIG. 5 is a view showing the flow of a power generation method according to the the invention.
FIG. 6 is a view showing the configuration of a power generation system according to a second example.
FIG. 7 is a view showing the configuration of a related-art power generation system.

### Description of Embodiments

Hereinafter, the embodiment for carrying out a power generation system and a power generation method according to the invention will be described with reference to the accompanying drawings.

### First Example

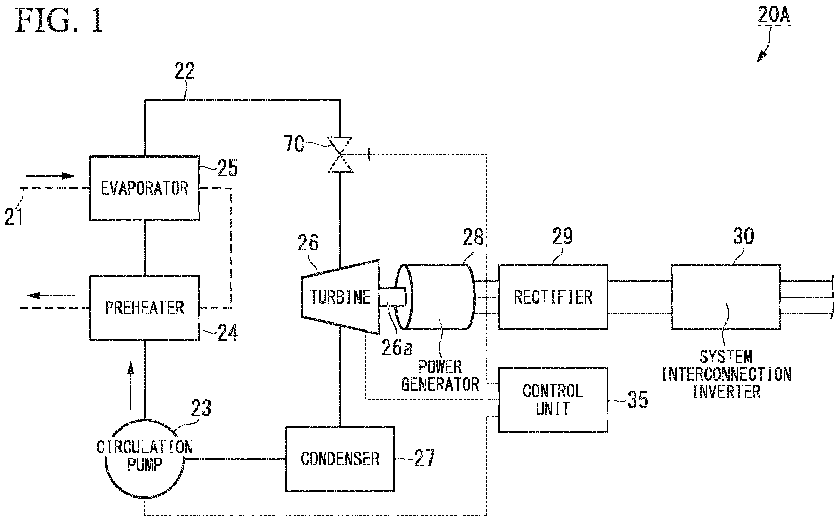

As shown in FIG. 1, a power generation system 20A includes a heat medium circuit 21 into which a heat medium is sent from a heat source, such as exhaust heat from vessels, factories, gas turbines, or the like, geothermal heat, solar heat, or temperature difference between cooler deep and warmer shallow ocean waters, and a medium circuit 22 that circulates a medium performing heat exchange with the heat medium of the heat medium circuit 21 therethrough, thereby obtaining heat energy.

Here, media including chlorofluocarbon media, such as HFC-134a, HF-C245fa, HFO-1234yf, and HFO-1234ze, can be used as the medium of the medium circuit 22.

The heat medium circuit 21 supplies heat media, such as steam and water (hot water), which are obtained by recovering heat from heat sources.

The medium circuit 22 includes a circulation pump 23, a preheater 24, an evaporator 25, a turbine (expander) 26, and a condenser 27.

The circulation pump 23 circulates the medium within the medium circuit 22 so as to compress and send out the medium, thereby passing through the preheater 24, the evaporator 25, the turbine 26, and then the condenser 27.

The preheater 24 and the evaporator 25 perform heat exchange between the heat medium of the heat medium circuit 21 and the medium of the medium circuit 22, the evaporator 25 heats and evaporates the pressurized medium through heat exchange with the heat medium (external source), and the preheater 24 preheats the medium with the remaining heat of the heat medium that has passed through the evaporator 25.

The turbine 26 rotationally drives a main shaft 26a around an axis thereof as the medium expands within a turbine chamber. A rotor (not shown) of a generator 28 is coupled to the main shaft 26a, and the rotor (not shown) is rotationally driven while facing a stator (not shown) of the generator 28. Accordingly, an alternating current is output in the generator 28.

The alternating current output from the generator 28 is converted into a direct current in a rectifier 29, and the converted direct current is re-converted into an alternating current in a system-interconnection inverter 30 and is output to an external power grid as generated electric power.

The above power generation system 20A includes a control unit (flow rate control device) 35.

The control unit 35 controls the supply of the heat medium of the heat medium circuit 21, and the operation of the circulation pump 23 of the medium circuit 22, while monitoring the operating states or the like of respective devices that constitute the power generation system 20A.

An operation control method of the power generation system 20A in the control unit 35 will be described below.

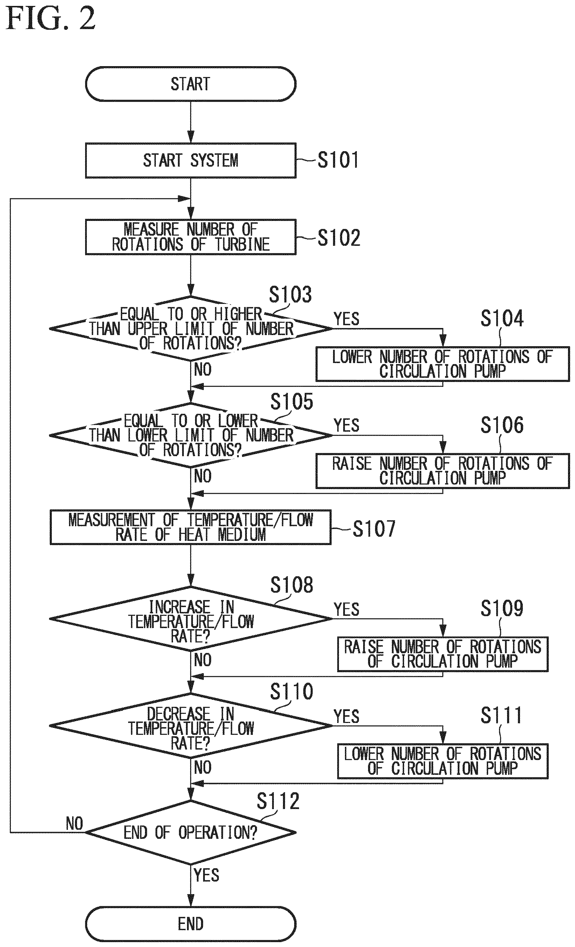

As shown in FIG. 2, the control unit 35 measures the number of rotations (or power generation amount in the generator 28) of the turbine 26 at given time intervals (Step S102) after the power generation system 20A is started in a predetermined procedure (Step S101).

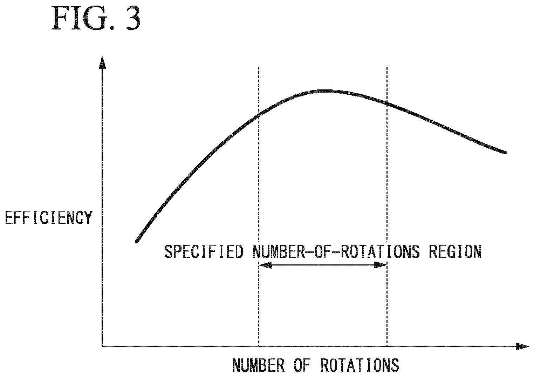

In heat sources, such as exhaust heat, geothermal heat, solar heat, and temperature difference between cooler deep and warmer shallow ocean waters, the temperature or the flow rate of the heat medium supplied via the heat medium circuit 21 from the heat source may fluctuate greatly. If the temperature or the flow rate of the heat medium fluctuates, the amount of steam generated in the evaporator 25 fluctuates, and as a result, the number of rotations of the turbine 26 fluctuates. Thus, as shown in FIG. 3, in the turbine 26, a region in which the number of rotations is set with high turbine efficiency is set in advance.

Then, the control unit 35 determines whether or not the number of rotations of the measured turbine 26 is equal to or higher than an upper limit of the region in which the number of rotations is preset (Step S103).

As a result, when the measured number of rotations is equal to or higher than the upper limit of the region in which the number of rotations is preset, the number of rotations of the circulation pump 23 is lowered (Step S104). In this case, the number of rotations of the circulation pump 23 can be changed in a plurality of steps, for example, every given number of rotations (for example, 30 rpm), and when the number of rotations is changed, the number of rotations of the circulation pump 23 can be changed for every one step.

Next, the control unit 35 determines whether or not the measured number of rotations of the turbine 26 is equal to or lower than a lower limit of the region in which the number of rotations is preset (Step S105).

As a result, when the measured number of rotations is equal to or lower than the lower limit of the region in which the number of rotations is preset, the number of rotations of the circulation pump 23 is raised (Step S106).

In this way, when the number of rotations of the turbine 26 is monitored at given time intervals and the number of rotations is outside the region in which the number of rotations is preset, the number of rotations is returned to the region in which the number of rotations is preset.

Moreover, the control unit 35 can perform so-called feedforward control in which heat energy supply fluctuation from the heat source is predicted by monitoring the heat energy supply fluctuation, in addition to the control of the above Steps S101 to S106.

That is, at least one of the temperature of the heat source, the temperature or the flow rate of the heat medium within the heat medium circuit 21, and the outlet temperature of the evaporator 25 is measured at given time intervals by a measurement device (not shown), and it is determined whether or not the measurement value is increased compared to a temperature or a flow rate, which has been measured immediately before, by a given value or higher (Step S107, S108).

Then, when there is an increase of the given value or higher, it is predicted that the heat energy supply from the heat source tends to increase, and the number of rotations of the circulation pump 23 is raised in advance (Step S109).

Additionally, it is determined whether or not the measurement value in Step S107 is decreased compared to the temperature or the flow rate, which has been measured immediately before, by a given value or higher (Step S110).

Then, when there is a decrease of the given value or higher, it is predicted that the heat energy supply from the heat source tends to decrease, and the number of rotations of the circulation pump 23 is lowered in advance (Step S111).

Then, the processing of the above Steps S102 to S111 is repeated at given time intervals until the operation of the power generation system 20A is ended (Step S 112).

When the number of rotations of the turbine 26 is outside the region in which the number of rotations is set with high predetermined operation efficiency in the above-described manner, the number of rotations of the circulation pump 23 is changed so as to adjust the circulation flow rate of the medium. Accordingly, the turbine 26 can be operated within the region in which the number of rotations is set with high operation efficiency in correspondence with energy fluctuation on a heat source, and power generation can be efficiently performed in the generator 28.

In addition, the number of rotations of the turbine 26 falls within the region in which the number of rotations is preset by adjusting the number of rotations of the circulation pump 23. Instead of this, however, the medium circuit 22 may include a flow rate regulating valve 70 (refer to FIG. 1) that regulates the flow rate of the medium. In this case, the control unit 35 may regulate the opening degree of the flow rate regulating valve 70 in accordance with the number of rotations of the turbine 26 such that the number of rotations of the turbine 26 falls within the region in which the number of rotations is preset.

Additionally, as the feedforward control, in Step S109 and Step S111, the number of rotations of the circulation pump 23 is increased or decreased on the basis of the amount of increase or decrease in the measurement value in the measurement device. However, the number of rotations of the circulation pump 23 may be increased or decreased on the basis of correlation data between the measurement value and the number of rotations of the circulation pump 23.

In addition, it is needless to say that the flow of the control described referring to FIG. 2 does not cause any trouble even if the order or the like of the flow is appropriately changed so long as the same function can be exhibited.

For example, instead of Steps S103 to S106, a configuration may be adopted in which, when it is determined that the measured number of rotations is equal to or lower than the lower limit of the region in which the number of rotations is preset after it is determined whether or not the measured number of rotations is equal to or lower than the lower limit, the number of rotations of the circulation pump is raised, and then, when the measured number of rotations is equal to or higher than the upper limit of the region in which the number of rotations is preset after it is determined whether the measured number of rotations is equal to or higher than the upper limit, the number of rotations of the circulation pump 23 is lowered. Additionally, a configuration may be adopted in which, when the measured number of rotations is equal to or higher than the upper limit of the region in which the number of rotations is preset after it is simultaneously determined whether or not the region in which the number of rotations is preset is equal to or higher than the upper limit and equal to or lower than the lower limit, the number of rotations of the circulation pump 23 is lowered, and when it is determined that the measured number of rotations is equal to or lower than the lower limit, the number of rotations of the circulation pump is raised.

Additionally, instead of Steps S107 to S111, a configuration may be adopted in which, at least one of the temperature of the heat source, the temperature or the flow rate of the heat medium within the heat medium circuit 21, and the outlet temperature of the evaporator 25 is measured at given time intervals by the measurement device (not shown), it is determined whether or not the measurement value is decreased compared to a temperature or a flow rate, which has been measured immediately before, by a given value or higher, and when there is a decrease of the given value or higher, it is predicted that the heat energy supply from the heat source tends to decrease and the number of rotations of the circulation pump 23 is lowered in advance. Next, a configuration may be adopted in which it is determined whether or not the measurement value is increased compared to the temperature or the flow rate, which has been measured immediately before, by the given value or higher, and when there is an increase of the given value or higher, it is predicted that the heat energy supply from the heat source tends to increase and the number of rotations of the circulation pump 23 is raised in advance.

### Embodiment of the invention

Next, the embodiment of a power generation system and a power generation method according to the invention will be described. In addition, in the embodiment to be described below, the same components as those of the first example will be designated by the same reference numerals in the drawings, and the description thereof will be omitted.

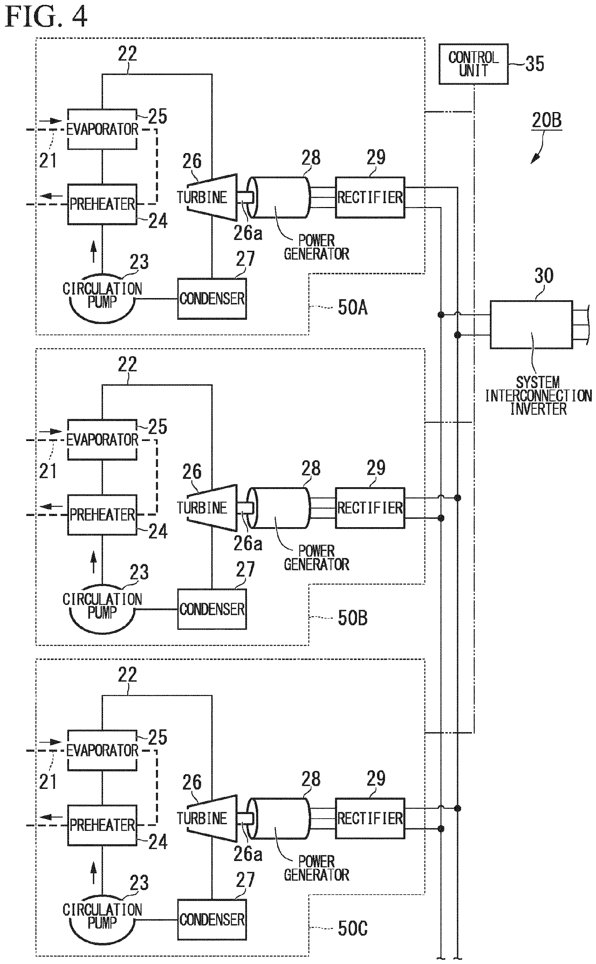

As shown in FIG. 4, a power generation system 20B according to the present embodiment includes a plurality of sets of power generation units 50A, 50B, 50C, ....

Each of the power generation units 50A, 50B, 50C ... includes the heat medium circuit 21, the medium circuit 22, the circulation pump 23, the preheater 24, the evaporator 25, the turbine 26, the condenser 27, the generator 28, and the rectifier 29, which are the same as components shown in the above first example. The rectifiers 29 of the plurality of sets of power generation units 50A, 50B, 50C, ... are connected to one system-interconnection inverter 30.

In such a power generation system 20B, in each of the power generation units 50A, 50B, 50C, ..., the circulation pump 23 circulates the medium within the medium circuit 22 so as to pass through the preheater 24, the evaporator 25, the turbine 26, and then the condenser 27. Then, a gas medium, which is preheated in the preheater 24 and evaporated and gasified in the evaporator 25, expands within the turbine chamber of the turbine 26, thereby driving the generator 28. The generator 28 outputs an alternating current, and this alternating current is converted into a direct current in the rectifier 29 and is output to the system-interconnection inverter 30.

Then, in the system-interconnection inverter 30, the direct currents output from the rectifiers 29 of the plurality of power generation units 50A, 50B, 50C, ... are re-converted into an alternating current, and the converted alternating current is output to an external power grid as generated electric power.

The control unit 35 of the power generation system 20B controls the supply of the heat medium of the heat medium circuit 21, the operation of the circulation pump 23 of the medium circuit 22, while monitoring the operating states or the like of each device that constitutes the power generation system 20B.

Additionally, the control unit 35 counts integrated values of the operating times of the turbines 26, and performs the operation control of the power generation units 50A, 50B, 50C, ... based on the integrated values.

Such a power generation system 20B is adapted so as to be able to selectively operate the plurality of power generation units 50A, 50B, 50C, ..., thereby changing the number of units (that is, the number of turbines 26 to be operated) to be operated and stepwisely changing the amount of power generation, in accordance with the amount of input heat energy of the heat medium sent from the heat medium circuit 21 through the control of the control unit 35, or the amount of electric power required on an output side of the power generation system.

An operation control method of the power generation system 20B in the control unit 35 will be described below.

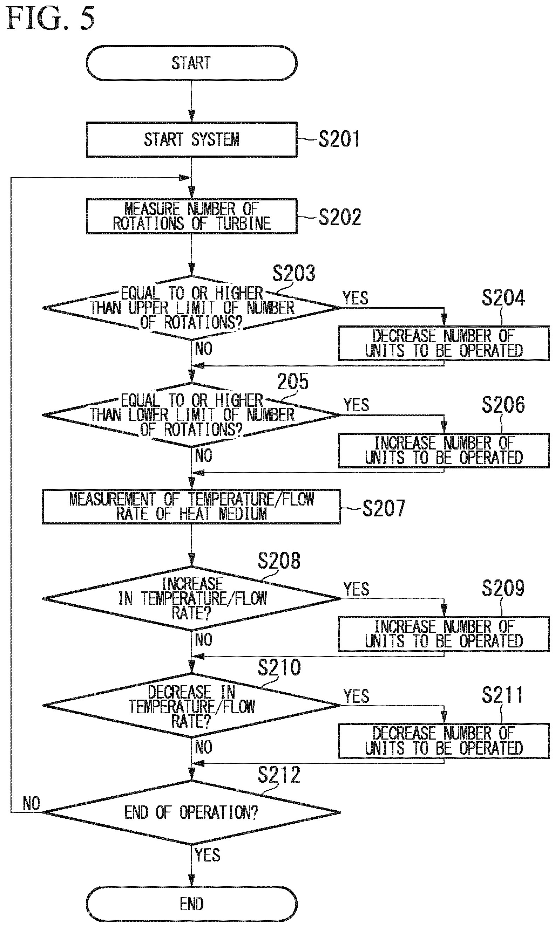

As shown in FIG. 5, the control unit 35 measures the number of rotations (or power generation amount in a generator 28) of a turbine 26 at given time intervals (Step S202) after the power generation system 20B is started in a predetermined procedure (Step S201).

The control unit 35 determines whether or not the measured number of rotations of the turbine 26 is equal to or higher than an upper limit of the region in which the number of rotations is set (refer to FIG. 3) with high turbine efficiency (Step S203).

As a result, when the measured number of rotations is equal to or higher than the upper limit of the region in which the number of rotations is preset, the number of units to be operated in the plurality of power generation units 50A, 50B, 50C, ... is decreased by one (Step S204).

Then, a medium flow rate per one unit in the turbine 26 of each unit increases, and the number of rotations of the turbine rises.

Next, the control unit 35 determines whether or not the measured number of rotations of the turbine 26 is equal to or lower than a lower limit of the region in which the number of rotations is preset (Step S205).

As a result, when the measured number of rotations is equal to or lower than the lower limit of the region in which the number of rotations is preset, the number of units to be operated in the plurality of power generation units 50A, 50B, 50C, ... is increased by one (Step S206).

Then, a medium flow rate per one unit in the turbine 26 of each unit decreases, and the number of rotations of the turbine falls.

In this way, when the number of rotations of the turbine 26 is monitored at given time intervals and the number of rotations is outside the region in which the number of rotations is preset, the number of rotations is returned to the number of rotations within the region in which the number of rotations is preset by increasing and decreasing the number of units to be operated in the plurality of power generation units 50A, 50B, 50C, ....

Moreover, the control unit 35 can perform operation control according to the heat energy supply fluctuation from the heat source, in addition to the control of the above Steps S201 to S206.

That is, the temperature or the flow rate of the heat medium within the heat medium circuit 21 is measured at given time intervals, and it is determined whether or not the measurement value is increased compared to a temperature or a flow rate, which has been measured immediately before, by a given value or higher (Step S207, S208).

Then, when there is an increase of the given value or higher, the number of units to be operated in the plurality of power generation units 50A, 50B, 50C, ... is increased by one (Step S209).

Additionally, it is determined whether or not the measurement value in Step S207 is decreased compared to the temperature or the flow rate, which was measured immediately before, by a given value or higher (Step S210).

Then, when there is a decrease of the given value or higher, the number of units to be operated in the plurality of power generation units 50A, 50B, 50C, ... is decreased by one (Step S211).

Then, the processing of the above Steps S202 to S211 is repeated at given time intervals until the operation of the power generation system 20B is ended (Step S212).

In the series of processing as described above, when the number of units operated in the plurality of power generation units 50A, 50B, 50C, ... is increased or decreased, it is preferable to determine units to be operated or stopped on the basis of the operating times of the turbines 26 of the power generation units 50A, 50B, 50C, .... Thus, the control unit 35 is adapted so as to preferentially stop operation from a unit equipped with the turbine 26 having the longest operating time among operating units when the number of units to be operated among the plurality of power generation units 50A, 50B, 50C, ... is reduced. Additionally, the control unit 35 is adapted so as to preferentially perform operation from a unit equipped with a turbine 26 with the shortest operating time among operating units when the number of units to be operated among the plurality of power generation units 50A, 50B, 50C, ... is increased.

When the number of rotations of the turbine 26 is outside the region in which the number of rotations is set with high predetermined operation efficiency in the above-described manner, the number of units operated in the power generation units 50A, 50B, 50C, ... is changed. Accordingly, the turbine 26 can be operated within the region in which the number of rotations is set with high operation efficiency in correspondence with the energy fluctuations on the heat source, and power generation can be efficiently performed in the generator 28.

When the number of units operated in the power generation units 50A, 50B, 50C, ... is increased or decreased, units to be operated or stopped are determined on the basis of the operating times of the each turbine 26 of the power generation units 50A, 50B, 50C, .... Accordingly, the operating times of the turbines 26 can be averaged among the power generation units 50A, 50B, 50C, .... As a result, intervals for the maintenance of the turbines 26 can be extended. Accordingly, maintenance can also be intensively and efficiently maintained by bringing the maintenance timings of all the turbines 26 close to each other.

In addition, in the above embodiment, the number of units operated in the power generation units 50A, 50B, 50C, ... is increased or decreased in correspondence to the energy fluctuations on the heat source. However, it is also possible to combine this with the configuration shown in the above first example. That is, in addition to increasing or decreasing the number of units operated in the plurality of power generation units 50A, 50B, 50C, ..., the medium flow rate in the medium circuit 22 can be regulated in the circulation pump 23 or the flow rate regulating valve 70 in each of the plurality of power generation units 50A, 50B, 50C, .... For example, in operating units in the plurality of power generation units 50A, 50B, 50C, ..., it is also possible to make medium flow rates different from each other between the units and make the numbers of rotations of the turbines 26 different from each other. Thus, in a turbine 26 with a shorter operating time, the number of rotations of this turbine can be made higher than that of the other turbines 26, and the load of this turbine can be raised higher than that of the other turbines.

In addition, in the above second embodiment, it is needless to say that the flow of the control described referring to FIG. 5 does not cause any trouble even if the order or the like of the flow is appropriately changed so long as the same function can be exhibited.

For example, instead of Steps S203 to S206, a configuration may be adopted in which, when it is determined that the measured number of rotations is equal to or lower than the lower limit of the region in which the number of rotations is preset after it is determined whether or not the measured number of rotations is equal to or lower than the lower limit, the number of units operated in the plurality of power generation units 50A, 50B, 50C, ... is increased by one, and then, when the measured number of rotations is equal to or higher than the upper limit of the region in which the number of rotations is preset after it is determined whether the measured number of rotations is equal to or higher than the upper limit, the number of units operated in the plurality of power generation units 50A, 50B, 50C, ... is decreased by one. Additionally, a configuration may be adopted in which, when the measured number of rotations is equal to or higher than the upper limit of the region in which the number of rotations is preset after it is simultaneously determined whether or not the region in which the number of rotations is preset is equal to or higher than the upper limit and equal to or lower than the lower limit, (the number of rotations of the circulation pump 23) the number of units operated in the plurality of power generation units 50A, 50B, 50C, ... is decreased by one, and when it is determined that the measured number of rotations is equal to or lower than the lower limit, the number of rotations of the circulation pump is raised.

Additionally, instead of Steps S207 to S211, at least one of the temperature of the heat source, the temperature or the flow rate of the heat medium within the heat medium circuit 21, and the outlet temperature of the evaporator 25 may be measured at given time intervals by measurement device (not shown), it may be determined whether or not the measurement value is decreased compared to a temperature or a flow rate, which has been measured immediately before, by a given value or higher, and when there is a decrease of the given value or higher, the number of units operated in the plurality of power generation units 50A, 50B, 50C, ... may be decreased by one. Next, it may be determined whether or not the measurement value is increased compared to the temperature or the flow rate, which has been measured immediately before, by the given value or higher, and when there is an increase of the given value or higher, the number of units operated in the plurality of power generation units 50A, 50B, 50C, ... may be increased by one.

### Modified Example

Although a configuration in which the rectifiers 29 of the plurality of power generation units 50A, 50B, 50C, ... are connected to one system-interconnection inverter 30 has been adopted in the above embodiment, in each of the plurality of power generation units 50A, 50B, 50C, ..., the rectifier 29 may include each system-interconnection inverter 30.

### Second example

Next, a second example of a power generation system and a power generation method will be described. In addition, in the second example to be described below, the same components as those of the first example and the embodiment of the invention will be designated by the same reference numerals in the drawings, and the description thereof will be omitted.

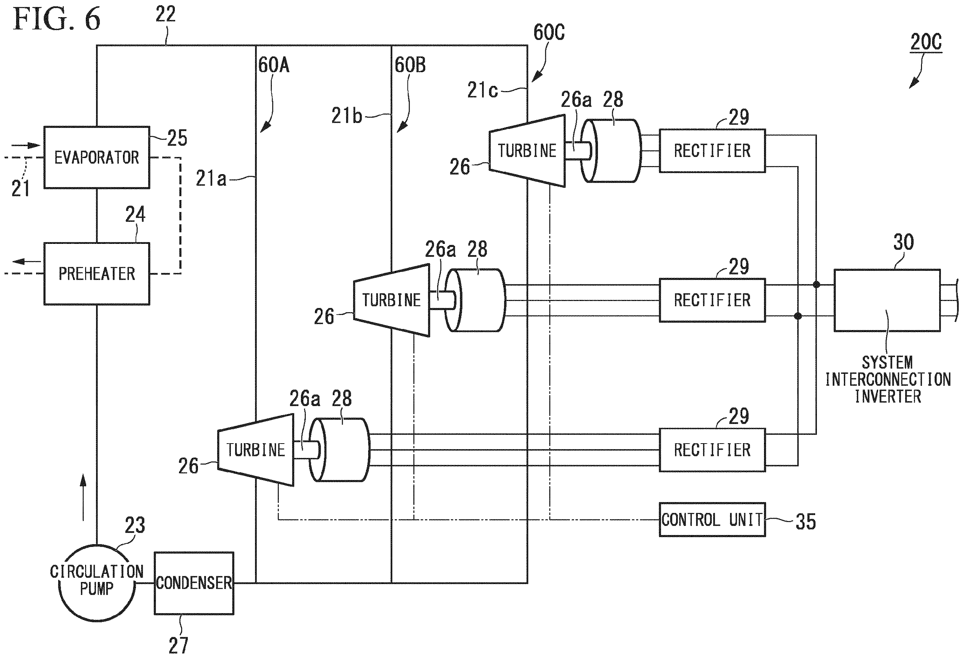

As shown in FIG. 6, a power generation system 20C according to the present example includes a plurality of sets of power generation units 60A, 60B, 60C, ....

In the power generation system 20C, a set of the medium circuit 22, the circulation pump 23, the preheater 24, the evaporator 25, and the condenser 27 is provided for one heat medium circuit 21, and the heat medium circuit 21 branches into a plurality of branched pipes 21a, 21b, 21c, ... between the evaporator 25 and the condenser 27. The power generation units 60A, 60B, 60C, ... are formed by each of the branched pipes 21a, 21b, 21c, .. being provided with the turbine 26, the generator 28, and the rectifier 29.

The each rectifier 29 of the plurality of sets of power generation units 60A, 60B, 60C, ... are connected in parallel to one system-interconnection inverter 30.

In the power generation system 20C having such a configuration, the medium sent out from the circulation pump 23 branches into the branched pipes 21a, 21b, 21c, ..., of the power generation units 60A, 60B, 60C, ..., after passing through the preheater 24 and the evaporator 25, within the medium circuit 22. In each of the power generation units 60A, 60B, 60C, ..., this medium drives the turbine 26 to generate electric power using the generator 28, and then returns to the circulation pump 23 through the condenser 27.

Then, in the system-interconnection inverter 30, the direct currents output from the rectifiers 29 of the plurality of power generation units 60A, 60B, 60C, ... are re-converted into an alternating current, and the converted alternating current is output to an external power grid as generated electric power.

Even in such a power generation system 20C, similar to the above embodiment of the invention, the number of units operated in the plurality of power generation units 60A, 60B, 60C, ... is increased or decreased in correspondence with the energy fluctuations on the heat source by the control of the control unit 35. Accordingly, the turbine 26 can be operated within the region in which the number of rotations is set with operation efficiency even if the energy fluctuations on the heat source occur, and power generation can be efficiently performed in the generator 28.

Additionally, the control unit 35 determines a unit to be operated or stopped on the basis of the operating time of each turbine 26 when the number of units operated among the plurality of power generation units 60A, 60B, 60C, ... is increased or decreased. Accordingly, the operating times of the turbines 26 can be averaged among the plurality of power generation units 60A, 60B, 60C, .... As a result, intervals for the maintenance of the turbines 26 can be extended. Accordingly, maintenance can also be intensively and efficiently maintained by bringing the maintenance timings of all the turbines 26 close to each other.

### Other Examples

For example, in the power generation systems 20A, 20B, and 20C of the above respective embodiments, exhaust heat from vessels, factories, gas turbines, or the like, are used as heat sources, or natural energy, such as geothermal heat, solar heat, temperature difference between cooler deep and warmer shallow ocean waters, and the like is used for power generation as a heat source. However, the types of the heat sources are not limited thereto. The types of the heat sources do not matter at all, and are suitable when heat sources in which at least the heat quantity may fluctuate are used.

Additionally, in the embodiment of the invention, the turbine 26 is shown as an expander. However, a scroll-type expander or the like can also be adopted instead of the turbine 26. Additionally, the above embodiment of the invention may include devices that store the operation time of a plurality of generators, and devices that display the operation time. In this case, the operation time may be displayed on display panels of power generation systems, or may be displayed on display panels outside of power generation systems via the Internet. In this case, administrators or maintenance workers of the power generation systems can confirm the operation situations of respective generators and perform operation management or maintenance.

In addition to this, the configurations mentioned in the above respective examples can be adopted or eliminated, or can be appropriately changed to other configurations.

### Industrial Applicability

According to the above-mentioned power generation system and power generation method, it is possible to operate the power generation system in a region with high efficiency, while coping with the energy fluctuations on the heat source.

### Reference Signs List

20A, 20B, 20C: POWER GENERATION SYSTEM
21: HEAT MEDIUM CIRCUIT
21a, 21b, 21c: BRANCHED PIPE
22: MEDIUM CIRCUIT
23: CIRCULATION PUMP
24: PREHEATER
25: EVAPORATOR
26: TURBINE (EXPANDER)
26a: MAIN SHAFT
27: CONDENSER
28: GENERATOR
29: RECTIFIER
30: SYSTEM-INTERCONNECTION INVERTER
35: CONTROL UNIT (FLOW RATE CONTROL DEVICE)
50A, 50B, 50C: POWER GENERATION UNIT
60A, 60B, 60C: POWER GENERATION UNIT
70: FLOW RATE REGULATING VALVE

## Claims

1. A power generation system comprising:
a medium circuit (22) through which a medium is circulated;
a circulation pump (23) configured to pressurize the medium so as to have the medium circulating through the medium circuit (22);
an evaporator (25) configured to heat the pressurized medium using heat of an external source so as to evaporate the medium, wherein the external source that the heat quantity is capable of fluctuating;
an expander (26) configured to be driven using the medium evaporated by the evaporator (25);
a generator (28) configured to be driven using the expander (26) to generate power; and
a flow rate control device (35) configured to control the flow rate of the medium flowing into the expander (26) such that, even when the heat quantity of the external source has fluctuated, the number of rotations of the expander (26) or the generator (28) is within a region in which the number of rotations is preset,
**characterized in that**
a plurality of sets of power generation units (50A, 50B, 50C) each including at least the expander (26) and the generator (28) are provided in parallel, and
the flow rate control device (35) counts integrated values of the operating times, selectively operates the power generation units (50A, 50B, 50C) based on the integrated values, and controls the flow rate of the medium flowing into the expander (26) such that the number of rotations of the expander (26) or the generator (28) in each of the power generation units (50A, 50B, 50C) is within the region in which the number of rotations is preset.

2. The power generation system according to Claim 1,
wherein the flow rate control device (35) controls the opening degree of a flow rate regulating valve (70) provided in the medium circuit (22) or the number of rotations of the circulation pump (23) so as to control the flow rate of the medium.

3. The power generation system according to Claim 1 or 2, further comprising:
a measurement device configured to measure at least one of a temperature of the external source, a temperature or flow rate of the heat medium supplied from the external source to the evaporator (25), and a temperature of the medium at an outlet of the evaporator (25),
wherein the flow rate control device (35) controls the flow rate of the medium flowing into the expander (26) on the basis of a change in a measurement result in the measurement device.

4. A power generation method comprising the steps of:
generating power by a generator (28), in which a medium is pressurized to have the medium circulating through a medium circuit (22), the pressurized medium is evaporated using heat of an external source, wherein the heat quantity of the external source is capable of fluctuating, and then the generator (28) is driven using the rotation of an expander (26);
detecting (S202) the number of rotations of the expander (26) or the generator (28);
determining (S203, 205) whether or not the detected number of rotations is within a region in which the number of rotations is preset; and
controlling the flow rate (S204, S206) of the medium flowing into the expander (26) such that, even when the detected number of rotations is not within the region in which the number of rotations is preset, the number of rotations of the expander (26) or the generator (28) is within the region in which the number of rotations is preset,
**characterized in that**
a plurality of sets of power generation units (50A, 50B, 50C) each including at least the expander (26) and the generator (28) are provided in parallel, and
in controlling the flow rate (S204, S206) of the medium, a flow rate control device (35) counts integrated values of the operating times, selectively operates the power generation units (50A, 50B, 50C) based on the integrated values, and controls the flow rate of the medium flowing into the expander (26) such that the number of rotations of the expander (26) or the generator (28) in each of the power generation units (50A, 50B, 50C) is within the region in which the number of rotations is preset.

## Patentansprüche

1. Energieerzeugungssystem, umfassend:
einen Mediumkreislauf (22) durch den ein Medium zirkuliert,
eine Umwälzpumpe (23), dafür eingerichtet, das Medium unter Druck zu setzen, damit das Medium im Mediumkreislauf (22) zirkuliert,
einen Verdampfer (25), dafür eingerichtet, das unter Druck gesetzte Medium unter Verwendung von Wärme aus einer externen Quelle zu erhitzen, um das Medium zu verdampfen, wobei die externe Quelle derart ist, dass die Wärmemenge schwanken kann,
einen Expander (26), dafür eingerichtet, unter Verwendung des durch den Verdampfer (25) verdampften Mediums angetrieben zu werden,
einen Generator (28), dafür eingerichtet, unter Verwendung des Expanders (26) angetrieben zu werden, um Energie zu erzeugen, und
eine Durchflussregelvorrichtung (35), dafür eingerichtet, den Durchfluss des Mediums, das in den Expander (26) fließt, derart zu regeln, dass auch in dem Fall, dass die Wärmemenge der externen Quelle geschwankt hat, die Drehzahl des Expanders (26) oder des Generators (28) in einem Bereich liegt, in dem die Drehzahl vorab festgelegt wurde,
**dadurch gekennzeichnet, dass**
mehrere Gruppen von Energieerzeugungseinheiten (50A, 50B, 50C), die jeweils mindestens den Expander (26) und den Generator (28) umfassen, parallel vorgesehen sind, und
die Durchflussregelvorrichtung (35) integrierte Werte der Betriebsdauern zählt, die Energieerzeugungseinheiten (50A, 50B, 50C) basierend auf den integrierten Werten wahlweise betreibt und den Durchfluss des in den Expander (26) fließenden Mediums derart regelt, dass die Drehzahl des Expanders (26) oder des Generators (28) in jeder der Energieerzeugungseinheiten (50A, 50B, 50C) innerhalb des Bereichs liegt, in dem die Drehzahl vorab festgelegt wurde.

2. Energieerzeugungssystem nach Patentanspruch 1,
in dem die Durchflussregelvorrichtung (35) den Öffnungsgrad eines Durchflussregelventils (70), das im Mediumkreislauf (22) vorgesehen ist, oder die Drehzahl der Umwälzpumpe (23) regelt, um den Durchfluss des Mediums zu regeln.

3. Energieerzeugungssystem nach Patentanspruch 1 oder 2, außerdem umfassend:
eine Messvorrichtung, dafür eingerichtet, mindestens entweder die Temperatur der externen Quelle, Temperatur oder Durchfluss des Heizmediums, das von der externen Quelle dem Verdampfer (25) zugeleitet wird, oder die Temperatur des Mediums an einem Auslass des Verdampfers (25) zu messen,
wobei die Durchflussregelvorrichtung (35) den Durchfluss des Mediums, das in den Expander (26) fließt, basierend auf einer Änderung im Messergebnis der Messvorrichtung regelt.

4. Energieerzeugungsverfahren, die folgenden Schritte umfassend:
Energieerzeugung durch einen Generator (28), wobei ein Medium unter Druck gesetzt wird, um das Medium in einem Mediumkreislauf (22) zirkulieren zu lassen, das unter Druck gesetzte Medium unter Verwendung der Wärme einer externen Quelle verdampft wird, wobei die Wärmemenge der externen Quelle schwanken kann, und dann der Generator (28) unter Verwendung der Rotation eines Expanders (26) angetrieben wird,
Bestimmung (S202) der Drehzahl des Expanders (26) oder des Generators (28),
Feststellung (S203, 205), ob die bestimmte Drehzahl in einem Bereich liegt, in dem die Drehzahl vorab festgelegt wurde, oder nicht, und
Regelung des Durchflusses (S204, S206) des Mediums, das in den Expander (26) fließt, derart, dass auch wenn die Drehzahl nicht in dem Bereich liegt, in dem die Drehzahl vorab festgelegt wurde, die Drehzahl des Expanders (26) oder des Generators (28) in dem Bereich liegt, in dem die Drehzahl vorab festgelegt wurde,
**dadurch gekennzeichnet, dass**
mehrere Gruppen von Stromerzeugungseinheiten (50A, 50B, 50C), die jeweils mindestens den Expander (26) und den Generator (28) umfassen, parallel vorgesehen sind, und
bei der Regelung des Durchflusses (S204, S206) des Mediums eine Durchflussregelvorrichtung (35) integrierte Werte der Betriebsdauern zählt, die Stromerzeugungseinheiten (50A, 50B, 50C) basierend auf den integrierten Werten wahlweise betreibt und den Durchfluss des in den Expander (26) fließenden Mediums derart regelt, dass die Drehzahl des Expanders (26) oder des Generators (28) in jeder der Stromerzeugungseinheiten (50A, 50B, 50C) innerhalb des Bereichs liegt, in dem die Drehzahl vorab festgelegt wurde.

## Revendications

1. Système de production d'énergie comprenant :
un circuit de milieu (22) à travers lequel on fait circuler un milieu ;
une pompe de circulation (23) configurée pour mettre le milieu sous pression afin que le milieu circule à travers le circuit de milieu (22) ;
un évaporateur (25) configuré pour chauffer le milieu sous pression à l'aide de la chaleur d'une source externe afin de faire évaporer le milieu, dans lequel la source externe que la quantité de chaleur est capable de fluctuer ;
un détenteur (26) configuré pour être entraîné à l'aide du milieu évaporé par l'évaporateur (25) ;
un générateur (28) configuré pour être entraîné à l'aide du détendeur (26) pour produire de l'énergie ; et
un dispositif de contrôle de débit (35) configuré pour contrôler le débit du milieu s'écoulant dans le détendeur (26) de sorte que, même lorsque la quantité de la chaleur de la source externe fluctue, le nombre de rotations du détendeur (26) ou du générateur (28) est dans une région dans laquelle le nombre de rotations est préréglé,
**caractérisé en ce que** :
une pluralité d'ensembles d'unités de production d'énergie (50A, 50B, 50C) comprenant chacun au moins le détendeur (26) et le générateur (28), sont prévus en parallèle, et
le dispositif de contrôle de débit (35) estime des valeurs intégrées des temps de fonctionnement, actionne sélectivement les unités de production d'énergie (50A, 50B, 50C) en fonction des valeurs intégrées, et contrôle le débit du milieu s'écoulant dans le détendeur (26), de sorte que le nombre de rotations du détendeur (26) ou du générateur (28) dans chacune des unités de production d'énergie (50A, 50B, 50C) est dans la région dans laquelle le nombre de rotations est préréglé.

2. Système de production d'énergie selon la revendication 1,
dans lequel le dispositif de contrôle de débit (35) contrôle le degré d'ouverture d'une valve de régulation de débit (70) prévue dans le circuit de milieu (22) ou le nombre de rotations de la pompe de circulation (23) afin de contrôler le débit du milieu.

3. Système de production d'énergie selon la revendication 1 ou 2, comprenant en outre :
un dispositif de mesure configuré pour mesurer au moins l'une parmi une température de la source externe, une température ou débit du milieu chauffant fourni de la source externe à l'évaporateur (25), et une température de milieu à une sortie de l'évaporateur (25),
dans lequel le dispositif de contrôle de débit (35) contrôle le débit du milieu s'écoulant dans le détendeur (26) en fonction d'un changement d'un résultat de mesure dans le dispositif de mesure.

4. Procédé de production d'énergie comprenant les étapes suivantes :
produire de l'énergie avec un générateur (28), dans lequel un milieu est mis sous pression pour faire circuler le milieu à travers un circuit de milieu (22), le milieu sous pression est évaporé en utilisant la chaleur d'une source externe, dans lequel la quantité de chaleur de la source externe est susceptible de fluctuer et ensuite le générateur (28) est entraîné à l'aide de la rotation d'un détendeur (26) ;
détecter (S202) le nombre de rotations du détendeur (26) ou du générateur (28) ;
déterminer (S203, 205) si le nombre de rotations détecté est dans une région dans laquelle le nombre de rotations est préréglé, ou pas ; et
contrôler le débit (S204, S206) du milieu s'écoulant dans le détendeur (26) de sorte que, même lorsque le nombre de rotations détecté n'est pas dans la région dans laquelle le nombre de rotations est préréglé, le nombre de rotations du détendeur (26) ou du générateur (28) est dans la région dans laquelle le nombre de rotations est préréglé,
**caractérisé en ce que** :
une pluralité d'ensembles d'unités de production d'énergie (50A, 50B, 50C) comprenant chacun au moins le détendeur (26) et le générateur (28), sont prévus en parallèle, et
lors du contrôle du débit (S204, S206) du milieu, un dispositif de contrôle de débit (35) estime des valeurs intégrées des temps de fonctionnement, actionne sélectivement les unités de production d'énergie (50A, 50B, 50C) en fonction des valeurs intégrées, et contrôle le débit du milieu s'écoulant dans le détendeur (26) de sorte que le nombre de rotations du détendeur (26) ou du générateur (28) dans chacune des unités de production d'énergie (50A, 50B, 50C) est dans la région dans laquelle le nombre de rotations est préréglé.
